# EUROPÄISCHE PATENTANMELDUNG

(11) **EP 0 985 492 A2**
(43) Veröffentlichungstag der Anmeldung: **15.03.2000**
(21) Anmeldenummer: 99117677.7
(22) Anmeldetag: 08.09.1999
(51) Int. Cl.: B23Q 16/02, F16H 49/00, F16C 31/04

(54) **Einrichtung zum Anpassen eines Koppelgetriebes**

(30) Priorität: 09.09.1998 DE 19841189
(71) Anmelder: Hofmann, Detlef, 75179 Pforzheim (DE)
(72) Erfinder: Hofmann, Detlef, 75179 Pforzheim (DE)
(74) Vertreter: Reinhardt, Harry

(57) **Zusammenfassung**

Bei einer Einrichtung zum Anpassen eines Koppelgetriebes, bei dem zwischen mehreren Lagermöglichkeiten (40a) und mehreren Eingriffsmöglichkeiten (17a) Kugeln (15) in Reihe angeordnet sind, treibt ein Treibelement mit wenigstens einer Rollbahn (32b) die Kugeln mehr oder weniger tief in die Eingriffsmöglichkeiten (17a). Das Treibelement (32) ist mittels einer Betätigungseinrichtung in Eingriffsrichtung (e) begrenzt beweglich. Dadurch, daß das Treibelement (32) eine quer zur Eingriffsrichtung (e) ausgerichtete Lagerausnehmung (32c) aufweist, die die Kugeln (15) wenigstens teilweise entlang den Eingriffsmöglichkeiten (17a) zur Mitnahme bei Bewegung des Treibelements in Eingriffsrichtung (e) führt, kann das Koppelgetriebe bedarfsweise zuverlässig und ohne Funktionsverlust an geänderte Bedingungen angepaßt werden (Fig. 1).

## Beschreibung

Die Erfindung betrifft eine Einrichtung zum Anpassen eines Koppelgetriebes zum Bewegen von Bauteilen relativ zueinander nach dem Oberbegriff des Anspruches 1.

Eine derartige Vorrichtung ist aus der EP 0 422 263 A1 bekannt und wird z.B. als Teilapparat eingesetzt. Das Koppelgetriebe muß dort die Herstellung von Kreis- bzw. Winkelteilungen um einen bestimmten einstellbaren Betrag erlauben. Hierbei werden sehr hohe Anforderungen an die Wiederholbarkeit bei der Produktion sowie die über den Teilapparat zu übertragenden Kräfte gestellt. Eine derartige Vorrichtung kann auch in Arbeitszentren oder in Verbindung mit Robotem eingesetzt werden. Bei der bekannten Vorrichtung wirken zwei Zahnkränze mit unterschiedlicher Zähnezahl zusammen. Über ein Treibelement oder eine Kurvenscheibe werden Kugeln mehr oder weniger tief zwischen die beiden Zahnkränze eingesteuert, so daß sich die gewünschte Untersetzung ergibt (vgl. auch DE 296 12 606 U1)

Aus der WO-A 98/03807 ist eine vergleichbare Vorrichtung bekannt, bei der die Kugeln zusätzlich in Aufnahmen eines Rollkörperkäfigs geführt sind. Durch kegel- oder kegelstumpfförmige Bohrungen ist es möglich, eine äußerst präzise Einstellung der Untersetzung in zwei Wirkrichtungen und damit innerhalb einer Fläche zu erhalten. Auch hier erfolgt für die gewünschte Untersetzung die Einsteuerung der Kugeln in die Aufnahmen über ein Treibelement mehr oder weniger tief.

Beide vorbekannten Vorrichtungen haben den Nachteil, daß zur Gewährleistung einer entsprechenden Präzision auf Dauer eine Spielfreiheit der Kugeln gegenüber ihren Aufnahmen gewährleistet werden muß, so daß in regelmäßigen Abständen das Koppelgetriebe nachgestellt und gewartet werden muß, um Verformungen im Getriebe auszugleichen. Vor allem bei höheren Drehgeschwindigkeiten darf der Anpreßdruck nicht zu hoch sein, da es sonst zu erheblicher Reibungswärme kommen kann.

Wird andererseits eine Justiereinrichtung für das Druckelement vorgesehen, so besteht bei nicht sachgemäßer Anwendung die Gefahr, daß die Kugeln aus ihren Aufnahmen herausrollen.

Ausgehend von diesem Stand der Technik liegt der vorliegenden Erfindung die Aufgabe zugrunde, eine Einrichtung zur Anpassung eines Koppelgetriebes zu schaffen, das bedarfsweise zuverlässig und ohne Funktionsverlust an geänderte Bedingungen anpaßbar ist.

Diese Aufgabe wird durch eine Einrichtung zum Anpassen eines Koppelgetriebes mit den Merkmalen des Anspruches 1 gelöst.

Das Treibelement selbst ist so gestaltet, daß es nicht nur wie bisher eine Rollbahn für die Kugeln aufweist, sondern diese auch in Eingriffsrichtung mitnehmen kann. Dennoch sind die Kugeln in jeder Stellung so gehalten, daß sich beim Rückstellen des Treibelements wieder die gewünschte Stellung im Koppelgetriebe ergibt. Das Treibelement ist in Eingriffsrichtung begrenzt beweglich und damit auch nachjustierbar, so daß eine beliebige Anpassung der Spielfreiheit der Kugeln möglich wird. Gleichzeitig können die Kräfte für die arbeitsbedingte Belastung vorgewählt werden, um Verformungen im Getriebe auszugleichen. Eine Anpassung an geänderte Bedingungen im Hinblick auf Belastung, Steifheit und Schnelligkeit des Getriebes ist jederzeit möglich. Während bisher ein Präzisionsgetriebe nach seinem Zusammenbau von Justagen abgesehen möglichst unbehelligt blieb, wird nun ein gezielter Eingriff möglich, der jedoch nicht zu einem Verlust an Präzision führt. Bei höheren Drehgeschwindigkeiten können die auf die Kugeln und Zahnkränze wirkenden Andruckkräfte durch eine entsprechende Lockerung an die entstehende Reibungswärme angepaßt werden, so daß die erforderlichen Antriebskräfte im optimalen Bereich gehalten werden können.

Je nachdem in welcher Eingriffstiefe sich die Kugeln in den Aufnahmen befinden, ergibt sich eine geringere oder höhere Kraftübertragung bzw. Anpreßkraft. Bei hoher Belastung und reduzierter Bahngeschwindigkeit können proportional zur Eindringtiefe und damit wachsenden Anpreßkraft die Kugeln beliebig von außen beeinflußt werden. Damit kann die Einrichtung durch Beeinflussung der Anpreßkraft das Getriebe bis zum Stillstand als stufenlose z.B. programmierbare Bremse bzw. Klemmung steuern.

Grundsätzlich können die Lagermöglichkeiten und die Eingriffsmöglichkeiten eine gleiche Anzahl aufweisen oder die einen ein Vielfaches der anderen sein. Dadurch kann die Verbindung durch die Betätigungseinrichtung aufgelöst werden, die Teile können zueinander verstellt werden und dann z.B. in einem anderen Winkel, weitergeschaltet um eine bestimmte Zähnezahl der Verzahnungen, wieder miteinander verbunden werden. Der Vorteil dieser Lösung ist, daß sich über eine Kegelringscheibe gleicher Ringhöhe eine Vier-Punkt-Verspannung jeder Kugel ergibt, so daß das Getriebe zwar blockiert ist, jedoch höhere Belastungen übertragen kann.

Bei einer Ausgestaltung nach Anspruch 2 können die Kugeln auch außer Eingriff mit den Eingriffsmöglichkeiten des Übertragungselements gebracht werden, so daß das Koppelgetriebe auskuppelbar ist und bedarfsweise über einen anderen Antrieb eine schnellere Gangart möglich wird. Somit kann zwischen verschiedenen Geschwindigkeiten umgeschaltet werden.

Nach den Ansprüchen 9 und 10 kann federbelastet ein sanftes Einkuppeln der Kugeln ins Koppelgetriebe erfolgen. Bei einer hohen Geschwindigkeit ergibt sich eine geringe Anpreßkraft, bei niedriger Geschwindigkeit eine hohe Anpreßkraft infolge der selbsttätigen Anpassung durch das elastische Mittel. Dies hat den Vorteil, daß für die Lebensdauer der Vorrichtung diese selbsttätige Anpassung der Spielfreiheit als auch eine Vorwahl für arbeitsbedingte Belastungen möglich wird. Soll eine Veränderung dieser Voreinstellung vorgenommen werden, so läßt sich das elastische Element von außen ansteuern. Zur Anpreßsteuerung und/oder Kupplungsbewegung wird gemäß Anspruch 10 eine lineare Steigung oder bei kreisförmiger Rollbahn z.B. ein ein- bzw. mehrgängiges Gewinde vorzugsweise außerhalb der Selbsthemmung eingesetzt. Durch entsprechende Bewegung eines Kupplungselements entlang dieser Steigung wird der entsprechende Hub der Kupplungsteile herbeigeführt. Die federbelastete Ausführungsform dient zusätzlich als Überlastsicherung insbesondere wenn die Selbsthemmung nur infolge der Federkraft erzeugt wird. Findet nun eine Überlast-Überwindung der Haftreibung statt, wird der entsprechende Zahn beim Eingriff ohne Beschädigung einfach übersprungen.

Weitere Vorteile ergeben sich aus den Unteransprüchen.

Im folgenden wird die Erfindung anhand von Ausführungsbeispielen näher erläutert. Es zeigen:
- Fig. 1: Einen Schnitt durch eine Einrichtung zum Anpassen eines Koppelgetriebes nach Linie 1-1 von Fig. 4 bei eingekuppeltem Kugelumlaufgetriebe,
- Fig. 2: eine Darstellung gemäß Fig. 1 in Leerlaufstellung,
- Fig. 3: eine Darstellung gemäß Fig. 1 bei ausgekuppeltem Koppelgetriebe und eingerasteter Verzahnung,
- Fig. 4: eine Draufsicht auf das an einem 2-achsigen Teilapparat angeordnete Koppelgetriebe mit zugehörigem Steuerelement,
- Fig. 5: eine Darstellung gemäß Fig. 1 in einer zwangsgeführten Ausführungsform,
- Fig. 6-8: Schnitte durch Antriebsmechanismus und Steuerelement,
- Fig. 9: eine schematische Darstellung des Koppelgetriebes,
- Fig. 10: eine Darstellung in einer Ausführungsform mit einem Duplex-Kugelumlaufgetriebe,
- Fig. 10a: einen Schnitt durch die Betätigungseinrichtung insbesondere bei einer Ausführungsform gemäß Fig. 10,
- Fig. 11: eine kombinierte Schwenk-Drehachse mit Getriebeumschaltung.

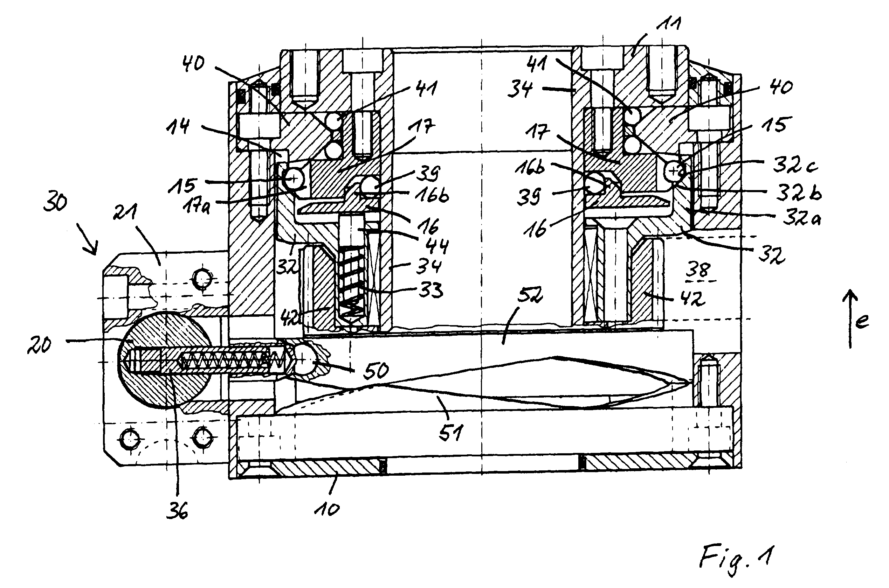

Fig. 1 zeigt einen Schnitt durch eine Einrichtung zum Anpassen eines Koppelgetriebes, wobei im oberen Teil ein an sich bekanntes Koppelgetriebe vorgesehen ist, wie es z.B. aus der EP 0 422 263 A1 bekannt ist. Derartige Koppelgetriebe dienen zum Bewegen von Bauteilen 10,11 relativ zueinander, d.h. insbesondere zum geradlinigen Verschieben und/oder Verdrehen wenigstens eines Bauteils 10 relativ zu einem zweiten Bauteil 11 entlang einer Bewegungsrichtung x. Grundsätzlich sind auch andere Bewegungen z.B. spiralförmig, splineartig, ellipsoidal oder entlang von Mantelflächen geometrischer Körper möglich. Eine derartige Vorrichtung kann z.B. eingesetzt werden, um Dreh- und Schwenkbewegungen in Arbeitszentren oder an Robotern zu ermöglichen, in denen bekannte Steuerungen zu groß und zu aufwendig wären. Aufgrund der bedarfsweise hohen Untersetzungsleistung kann die Vorrichtung aber auch in Verbindung mit einem Spannfutter oder als Kraftverstärker für ein bzw. zwei Bewegungsrichtungen eingesetzt werden. Dennoch läßt sich die Vorrichtung auch infolge der flächigen Abstützung sehr kompakt ausbilden, was insbesondere bei Dreh- und Schwenkbewegungen von Vorteil ist. Bezüglich weiterer Einsatzgebiete wird insbesondere auf die WO-A 98/03807, Seite 4 verwiesen, die dort eine beispielhafte Angabe derartiger Einsatzbereiche enthält. Die Einrichtung besitzt mehrere, einem der beiden Bauteile 10,11 zugeordnete Lagermöglichkeiten 40a, die hier an einem stationären Element 40 angeordnet sind. Im Ausführungsbeispiel weist das stationäre Element 40 die Lagermöglichkeiten 40a in Form einer kreisförmigen Verzahnung auf.

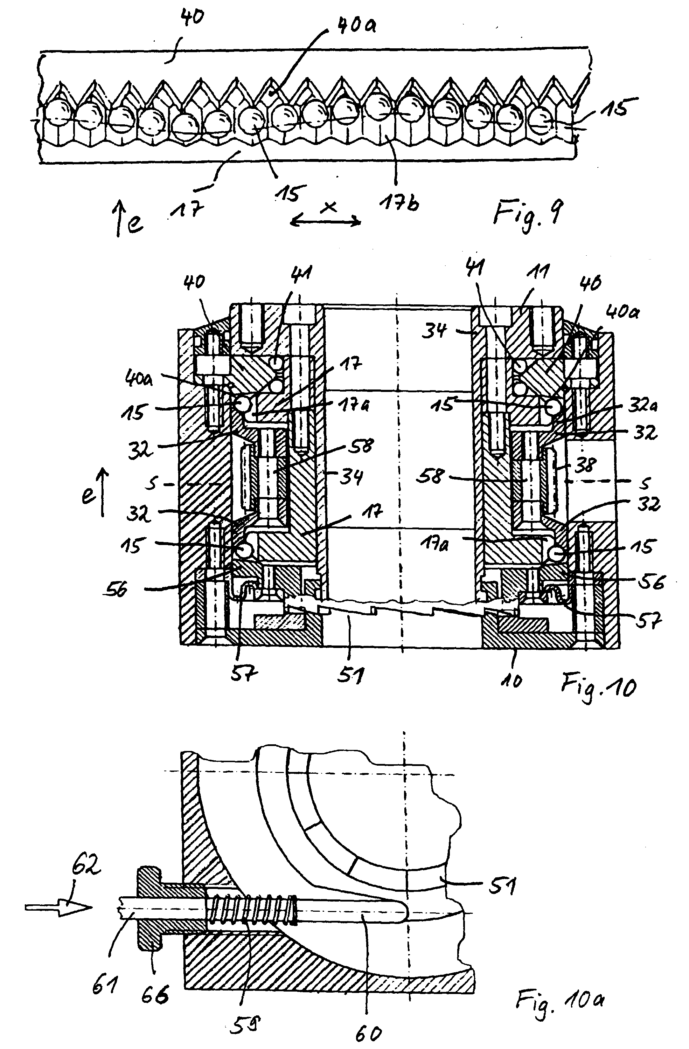

Die Lagermöglichkeiten 40a wirken mit einem dem anderen der beiden Bauteile 11,10 zugeordneten Übertragungselement 17 zusammen, das in Fig. 1 mit der Abtriebsspindel 34 zur gemeinsamen Rotation verbunden ist. Das Übertragungselement 17 besitzt mehrere in Bewegungsrichtung x (Fig. 9) in Reihe angeordnete Eingriffsmöglichkeiten 17a z.B. in Form einer Prismenverzahnung. Diese Eingriffsmöglichkeiten stellen ebenfalls eine Verzahnung dar, wobei die Zähne im Ausführungsbeispiel etwa im rechten Winkel zur Verzahnung der Lagermöglichkeiten 40a stehen. Zwischen den Lagermöglichkeiten 40a und dem Übertragungselement 17 sind Kugeln 15 in Bewegungsrichtung x in Reihe angeordnet. Wesentlich ist die Anordnung in Reihe - ggf. auch in unterbrochener Reihe wie z.B. eine Kugel nur in jeder zweiten Eingriffsmöglichkeit - , jedoch nicht die geometrische Form dieser Reihe. Diese Kugeln liegen an der Rollbahn 32b eines Treibelements 32 an. Die Rollbahn 32b treibt die Kugeln 15 in einer Eingriffsrichtung e mehr oder weniger tief in die Eingriffsmöglichkeiten 17a, wobei die Kugeln 15 zumindest zeitweise die Flanken 17b der Eingriffsmöglichkeiten 17a berühren. Dadurch wird eine Getriebeeingriff bewerkstelligt.

Die Lagermöglichkeiten 40a sind damit einem mit dem ersten Bauteil verbundenen ersten Zahnkranz zugeordnet, während die Eingriffsmöglichkeiten 17a einem über das Übertragungselement 17 mit dem anderen Bauteil 10 bzw. 11 verbundenen zweiten Zahnkranz zugeordnet sind. Das Treibelement 32, das als ein Getriebeglied (Getriebe-Eingangsglied bzw. Getriebe-Ausgangsglied) mit wenigstens einer Rollbahn 32b auf die an der Rollbahn anliegenden Kugeln 15 einwirkt, verschiebt die Kugeln in einer Eingriffsrichtung e mehr oder weniger tief in die durch Flanken 17b begrenzten Eingriffsmöglichkeiten 17a des zweiten Zahnkranzes nacheinander ein. Dadurch wird - im wesentlichen abhängig vom Teilerverhältnis zwischen Lagermöglichkeiten und Eingriffsmöglichkeiten eine Über-, Unter- oder Umsetzung des als weiteren Getriebeglieds (Getriebe-Ausgangsglied bzw. Getriebe-Eingangsglied) dienenden Bauteils bewirkt.

Fig. 9 verdeutlicht die Wirkungsweise des Treibelements 32. Das Treibelement besitzt wenigstens eine vorzugsweise auf- und ablaufende Steigung, mit der die Kugeln 15 in der tiefsten Stellung über die Zähne der Lagermöglichkeiten hinweggleiten, während sie in der höchsten Stellung in die Zähne eingepreßt werden. Sofern die Einrichtung als Koppelgetriebe betrieben werden soll, wird darauf geachtet, daß eine Dreipunkt-Lagerung der Kugeln bewirkt wird und es nicht zu einer Vierpunkt-Lagerung kommt, die das Getriebe blockieren würde. In diesem Fall ist der Abstand der Eingriffsmöglichkeiten 17a zueinander zumindest in einem geringfügig anderen Teilerverhältnis als der Abstand der Lagermöglichkeiten 40a. Es ist jedoch möglich, den Abstand der Eingriffsmöglichkeiten zueinander im gleichen Verhältnis oder als ein Vielfaches des Abstandes der Lagermöglichkeiten 40a zu wählen. In diesem Fall ergibt sich infolge der dann entstehenden Vierpunkt-Lagerung eine bessere Kraftübertragung, wobei die noch zu beschreibende Einrichtung dazu dient, diese Verbindung aufzulösen und nach einer entsprechenden Winkeldrehung wiederherzustellen.

Wenngleich im Ausführungsbeispiel die Kugeln 15 auf einer Kreisbahn angeordnet sind, können diese auch in Längsrichtung nebeneinander angeordnet werden, wie dies Fig. 9 zeigt. Es ergibt sich stets ein Zusammenwirken zwischen den Lagermöglichkeiten 40a am in den Figuren stationären Element 40 und den Eingriffsmöglichkeiten 17a des Übertragungselements mit den Kugeln 15, die meist zwischen den beiden Zahnkränzen liegen und in ihrer Lage durch das Treibelement 32 beeinflußt werden.

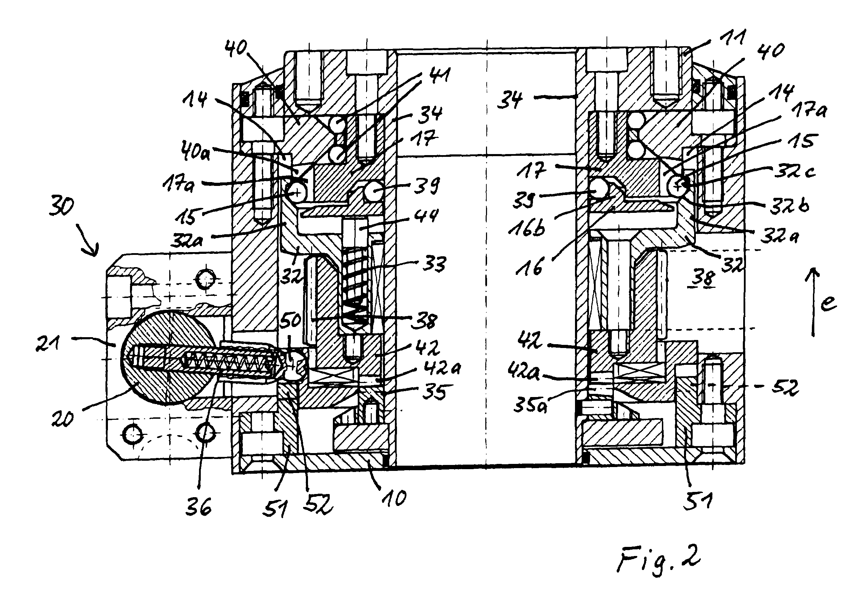

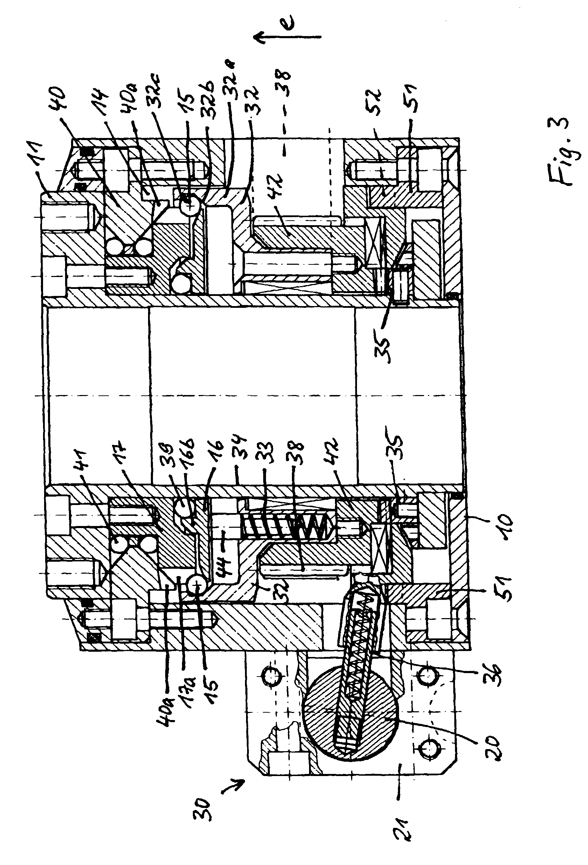

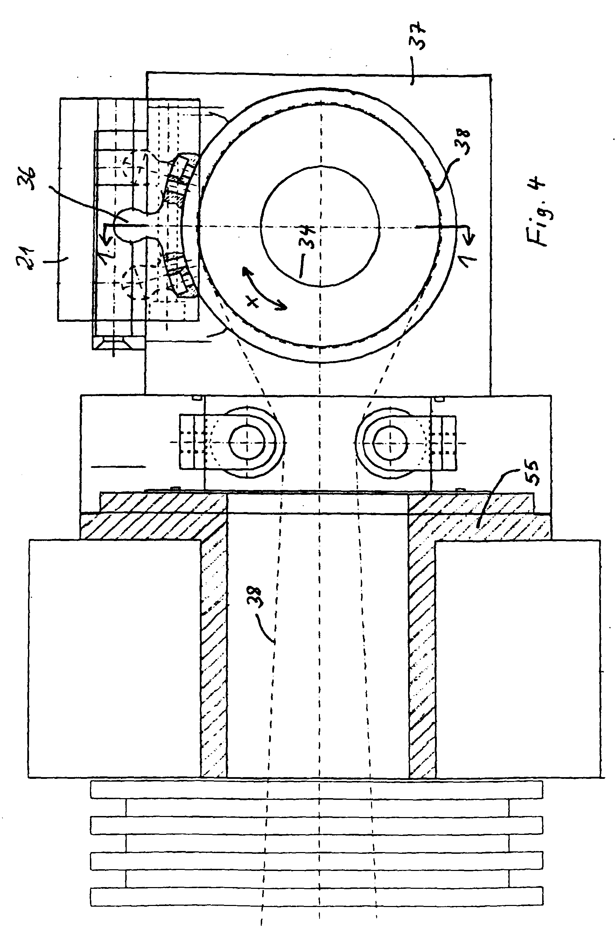

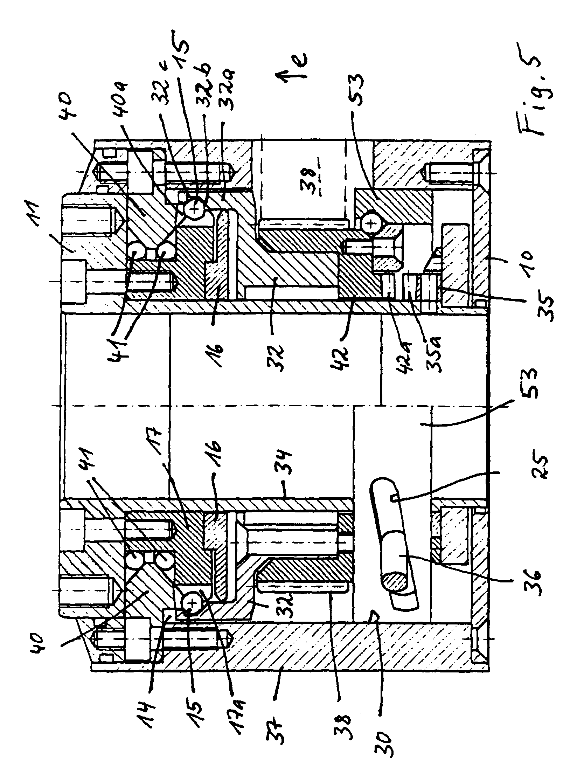

Das Treibelement 32 ist mittels einer Betätigungseinrichtung 30 in Eingriffsrichtung e bis in eine Stellung begrenzt beweglich, in der die Kugeln 15 außer Eingriff sowohl mit den Lagermöglichkeiten 40a als auch mit den Eingriffsmöglichkeiten 17a sind, wie dies die Figuren 2 und 3 darstellen. Erreicht wird dies durch eine besondere Ausgestaltung des Treibelements, das jetzt nicht mehr nur die Rollbahn 32b aufweist, sondern an einem Radialflansch 32a zusätzlich eine Lagerausnehmung 32c, so daß der Radialflansch 32a die Kugeln in und außer Kupplungsposition mit dem Koppelgetriebe bringen kann und sie somit in den Figuren in axialer Richtung hält. Der Radialflansch 32a erstreckt sich bei kreisförmiger Rollbahn 32b in Eingriffsrichtung e. Die Lagerausnehmung 32c ist in die Wandung des Radialflansches 32a eingelassen. Um den gewünschten Hintergriff der Kugeln 15 erreichen zu können und dennoch das Treibelement 32 in Eingriffsrichtung e bewegen zu können, ist am stationären Element 40 eine Ausnehmung 14 vorgesehen, in die das Treibelement 32 mit dem Radialflansch 32a gemäß Fig. 1 eintauchen kann. Das Treibelement 32 hält bei kreisförmiger Rollbahn 32b die Kugeln 15 damit quer zur Eingriffsrichtung e in Stellung. Ist die Rollbahn linear, wird der Radialflansch durch eine entsprechend ebenfalls mit Lagerausnehmung versehene Wandung ersetzt.

Wie im Stand der Technik bekannt, kann durch Verwendung von kegel- oder kegelstumpfförmigen Bohrungen eine flächige Ansteuerung der Kugeln oder bei Verwendung von aufeinander einwirkenden Zahnkränzen eine lineare Bewegungsrichtung erreicht werden. Im Ausführungsbeispiel ist die Bewegung der Kugeln 15 nach unten begrenzt durch ein Rückhalteelement 16, das seinerseits einen Radialflansch 16b aufweist und darüber und ein Lager 39 an der Abtriebsspindel gelagert ist. Ausgehend von der eingekuppelten Stellung des Kugelumlaufgetriebes in Fig. 1 wird das Treibelement zunächst in die Leerlaufstellung gemäß Fig. 2 und dann bedarfsweise in eine weitere Schaltstellung gemäß Fig. 3 überführt. Dies erfolgt in der federbelasteten Ausführungsform des Treibelements gemäß den Figuren 1 bis 3 mittels eines Steuerelements 36, das über ein Kugellager 60 an der Treibkurve 52 anliegt.

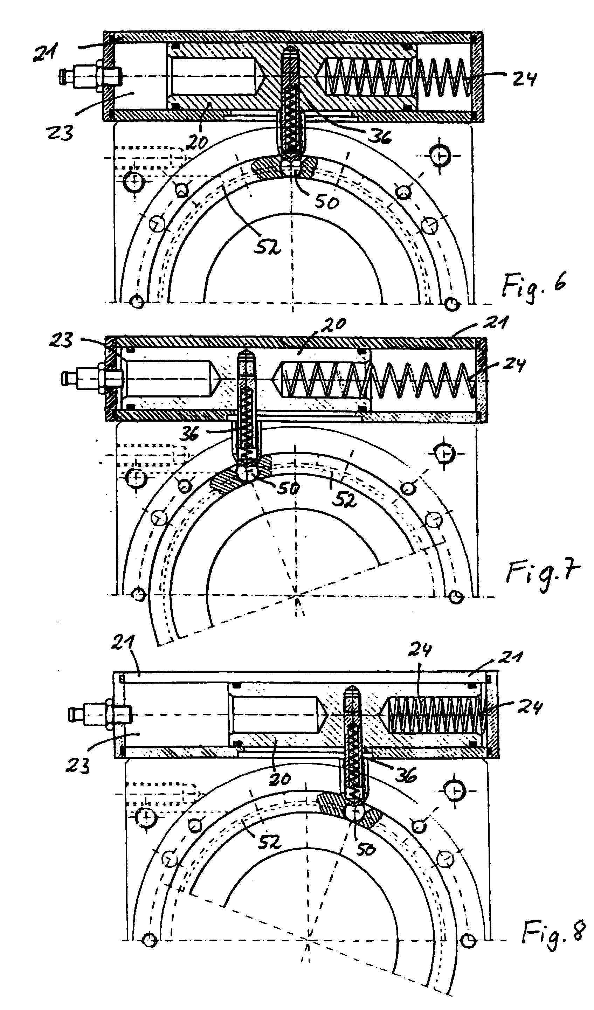

Fig. 1 verdeutlicht, daß die Treibkurve 52 mit der Treibkurve 51 zusammenwirkt, wobei durch das elastische Element 33, im Ausführungsbeispiel wenigstens eine Feder, eine Selbsthemmung zwischen den Steigungen der beiden Treibkurven 51,52 erreicht wird. Der Antrieb des Treibelements erfolgt über den Antriebsriemen 38. Der Antriebsriemen 38 steht dazu über das Antriebselement 42 mit dem Treibelement in Verbindung. Solange sich die Kugeln 15 in Eingriff mit den Lagermöglichkeiten 40a und den Eingriffsmöglichkeiten 17a befinden, erfolgt eine entsprechende Untersetzung der Antriebsbewegung über das Kugelumlaufgetriebe oder Koppelgetriebe. Vergleicht man die Stellung der Kugeln in Fig. 1 mit der Stellung gemäß Fig. 2, ist zu erkennen, daß sich die Kugeln 15 unterhalb der Lagermöglichkeiten 40a befinden. Ferner ist die Ausnehmung 14 im Vergleich zu Fig. 1 größer geworden. Das elastische Federelement 33 sorgt immer noch dafür, daß das Rückhalteelement 16 in seiner Stellung gehalten wird. Sowohl das Antriebselement 42 als auch ein Übertragungselement 35 weisen Verzahnungen 42a,35a auf, die in der in Fig. 2 gezeigten Leerlaufstellung jedoch noch nicht miteinander in Eingriff sind. Wird das Steuerelement 36 weiterbewegt, ergibt sich die Stellung gemäß Fig. 3. Hier greifen die Verzahnungen von Antriebselement 42 und Übertragungsmittel 35 ineinander, so daß das Übertragungsmittel die Bewegung des Antriebsriemens 38 unmittelbar auf die Abtriebsspindel 34 übertragen kann. In dieser Schaltstellung ist also das Koppelgetriebe ausgekoppelt und das Übertragungsmittel 35 angekoppelt. Bei dem in Fig. 4 dargestellten 2-achsigen Teilapparat wird der Antriebsriemen 38 durch die Spindel 55 geführt. Zur Rückstellung kann z.B. ein Inkrementalgeber eingesetzt werden.

Das in Fig. 1 die Eingriffsmöglichkeiten 17a aufweisende Übertragungselement 17 ist an dem mit dem Bauteil 10 stationären Element 40 über Lager 41 ebenfalls gelagert, so daß es bedarfsweise ebenfalls mit der Abtriebsspindel 34 rotiert werden kann. Zwischen Übertragungselement 17 und dem Flansch 16b des Druckelements 16 liegt das Kugellager 39.

Bei einer derartigen Ausführungsform kann das elastische Element 33 zur Erzielung einer selbsttätigen Anpassung der Spielfreiheit über die gesamte Lebensdauer eingesetzt werden, da dieses elastische Element stets dafür sorgt, daß ein entsprechender und auch geeigneter Anpreßdruck der Kugeln 15 vorliegt. Die Betätigungseinrichtung 30, die über das Steuerelement 36 angesteuert wird, bewegt die Kugeln 15 über das Treibelement 32. Dadurch können bei höheren Drehgeschwindigkeiten die auf die Kugeln und Zahnkränze wirkenden Andruckkräfte reduziert werden und damit die erforderlichen Antriebskräfte im optimalen Bereich gehalten werden. Umgekehrt kann durch das Steuerelement 36 bei Überführung in die Stellung gemäß Fig. 7 und Fig. 8 die Anpreßkraft auf die Kugeln beliebig von außen erhöht oder verringert werden, so daß sich dadurch bis zum Stillstand eine stufenlose Bremse bzw. Klemmung ergibt. Die Kraft ist stufenlos einstellbar, so daß bei hoher Geschwindigkeit mit geringer Anpreßkraft gearbeitet werden kann, während bei niedriger Geschwindigkeit eine hohe Anpreßkraft aufgebracht wird. Anstelle der als elastisches Element 33 ausgebildeten Feder können auch veränderliche Kraftspeicher und Dämpfungselemente eingesetzt werden.

Wie bereits erläutert, erfolgt die Bewegung des Treibelements 32 in Eingriffsrichtung e unter Einfluß der Treibkurven 51,52. Die Steigungen dieser Treibkurven können in einer bzw. dachförmigen zwei Richtungen über Nocken angesteuert werden. Die Steigungen können sowohl progressiv wie auch degressive Kurvensteigungen für veränderliche Anpreßkraftsteuerungen aufweisen. Die Kurven können gemäß Fig. 1 bis 3 federbelastet oder als Zwangssteuerung gemäß Fig. 5 in beiden Richtungen wirken, so daß sie gegen eine oder mehrere Rollen oder Zapfen gegenseitig bewegbar sind. Selbsthemmung kann in bestimmten axialen Stützbereichen auch alleine durch Federkraft gegenüber dem Kurvenanstieg erzeugt werden. Vorspannungsänderungen werden zusätzlich bedarfsweise über Computerprogramme eingesteuert, worauf unten näher eingegangen wird. Als Übertragungsmittel 35 kann z.B. eine Hirtverzahnung, Magnetkupplung oder Reibkupplung eingesetzt werden.

Im ersten Ausführungsbeispiel kann die Federkraft in Verbindung mit der dadurch hervorgerufenen Selbsthemmung zwischen den Treibkurven 51 und 52 auch als Überlastsicherung eingesetzt werden. Übersteigen die vom Getriebe aufzubringenden Kräfte eine bestimmte Kraft, die höher ist als die durch die Federkraft hervorgerufene Haftreibung zwischen den beiden Treibkurven, entlastet sich das Getriebe selbst dadurch, daß die Treibkurven aufeinander in Fig. 1 nach unten gleiten, wobei bedarfsweise sogar eine Sollbruchstelle an der Abstützung der Treibkurven vorgesehen werden kann, um den Mechanismus im übrigen zu schützen. In Fig. 5 hingegen liegt eine Zwangssteuerung vor. Auf das elastische Mittel wird verzichtet und aufgrund der Zwangssteuerung kann auch auf das Lager zwischen Übertragungselement 17 und Rückhalteelement 16 verzichtet werden. Während die federbelastete Ausführungsform ein sanftes Einkuppeln der Kugeln ermöglicht, ist dies bei der Zwangssteuerung nicht der Fall, jedoch kann auf die zweite Treibkurve verzichtet werden. Da infolge der Zwangsführung jedoch größere Kräfte auftreten, ist es unter Umständen erforderlich, an der Treibkurve eine flächige Abstützung vorzusehen und das Koppelgetriebe an wenigstens drei Punkten auf der Kurve abzustützen. Bei Bewegung des Steuerelements 36 in der Zwangsführung 25 wird das Treibelement mitsamt Übertragungselement und Antriebsriemen nach unten mitgenommen, bis sich eine Ankopplung der Verzahnungen 35a,42a von Übertragungsmittel 35 und Antriebselement 42 ergibt oder z.B. bei Stirn rädern und Vielkeilwellen ein Eingriff nach Zahnverschiebung einstellt. Im übrigen ist die Wirkungsweise wie bereits erläutert.

Die Figuren 6 bis 8 zeigen die Ansteuerung des Steuerungselements 36. Das Steuerelement 36 ist über ein Kugellager 50 mit der Treibkurve 52 verbunden. Als Betätigungseinrichtung 30 wird im Ausführungsbeispiel eine Kolben-Zylinder-Einheit verwendet, deren Steuerkolben 20 in einem Gehäuse 21 angeordnet ist. Der Kolben kann in den Figuren von links mit einem Druckmedium beaufschlagt werden, z.B. pneumatisch oder hydraulisch. Auf der rechten Seite ist eine Rückstellfeder 24 angeordnet, deren Kraft ebenfalls auch zur Rückstellung des Steuerkolbens und damit des Treibelements in die gekoppelte Stellung eingesetzt werden kann. Grundsätzlich kann der Steuerkolben 20 nicht nur von dem Druckraum 23 aus mit Druckmedium beaufschlagt werden, es kann auch anstelle der Rückstellfeder 24 der Steuerkolben 20 von der rechten Seite mit Druckmedium beaufschlagt werden. An dieser Stelle ist eine computergesteuerte Regelung des Koppelgetriebes möglich. Die Rückstellfeder 24 trägt je nach Einstellung zur Erzielung der Selbsthemmung bei. Sie sollte stärker sein als das elastische Mittel 33, um dessen Kraft bedarfsweise überwinden zu können, so dass das Steuerelement möglichst über den in Fig. 6 dargestellten Totpunkt hinweg in eine der beiden Schaltstellungen überführt werden kann, sofern nicht diese Stellung als Schaltstellung erwünscht ist.

Fig. 10 zeigt eine weitere Ausführungsform, bei der oben und unten zwei Koppelgetriebe zur Erzielung einer höheren Drehmomentsteifigkeit zusammengekoppelt sind, so ddasssich eine doppelte Kraft ergibt. Gerade bei dieser hohen Belastung ist es erforderlich, derartige Getriebe regelmäßig nachzustellen, was hier durch die Beweglichkeit der Treibelemente 32 in Eingriffsrichtung e ermöglicht wird.

Mit dem Bauteil 11 ist die Abtriebsspindel 34 und das Übertragungselement 17 zur gemeinsamen Bewegung verbunden, wobei symmetrisch zur Symmetrieachse s-s oben und unten die beiden Koppelgetriebe je ein Übertragungselement 17 aufweisen. Zum Bauteil 10 gehören das stationäre Element 40 mit den Lagermöglichkeiten 40a sowie ein Zahnring 56, der im unteren Teil ebenfalls Lagermöglichkeiten ausbildet. Das vom Antriebsriemen 38 umgriffene, zur Symmetrieachse s-s symmetrische Treibelement 32 ist, genauer gesagt zwei über ein Verbindungselement 58 miteinander verbundene Treibelemente sind beidseits in Kugeln 15 zweier Koppelgetriebe abgestützt und über eine Treibkurve 51 betätigbar. Die Treibkurve wirkt auf den in Fig. 10 unten liegenden Zahnring 56, der über elastische Mittel 57 wie z.B. Blechfedern oder eine Membran gelagert ist. Der innen liegende Teil ist noch über die Lager 41 gelagert, zur Lagerung genügen aber alleine schon die Kugeln 15 der Koppelgetriebe.

Wird die Treibkurve betätigt, bewegt sie über die unteren Kugeln 15 die Treibelemente 32 und damit auch die oberen Kugeln 15. Damit sind zunächst die eingangs erläuterten Bremsbewegungen bedarfsweise unter Einsatz eines steuerbaren starren Mittels zur Betätigung der Treibelemente möglich, ebenso ist aber eine Anpassung und Nachjustierung beider Getriebe gleichzeitig schon alleine infolge der elastischen Mittel 57 ohne Eingriff in die Getriebe zur Anpassung an geänderte Bedingungen möglich.

Das Duplexgetriebe wird z.B. gemäß Fig. 10a betätigt. In die Treibkurve 51 greift ein Betätigungsstift 60 ein, der über ein elastisches Element gelagert ist. Das elastische Element 59, hier eine Feder hält die Treibkurve 51 mit einer voreingestellten Anpreßkraft. Die voreingestellte Anpreßkraft ist über die Stellschraube 66 veränderlich. Die Anpreßkraft kann z.B. pneumatisch oder hydraulisch über die Druckleitung 61 oder auch mechanisch in Richtung des Pfeils 62 bedarfsweise erhöht werden. Über die schiefe Ebene der Treibkurve 51 kann dieses Duplexgetriebe bei Überlast auskuppeln, sobald die Selbsthemmung, beeinflußt durch die Wahl der Steigung oder durch elastische Mittel erhöht, überwunden ist.

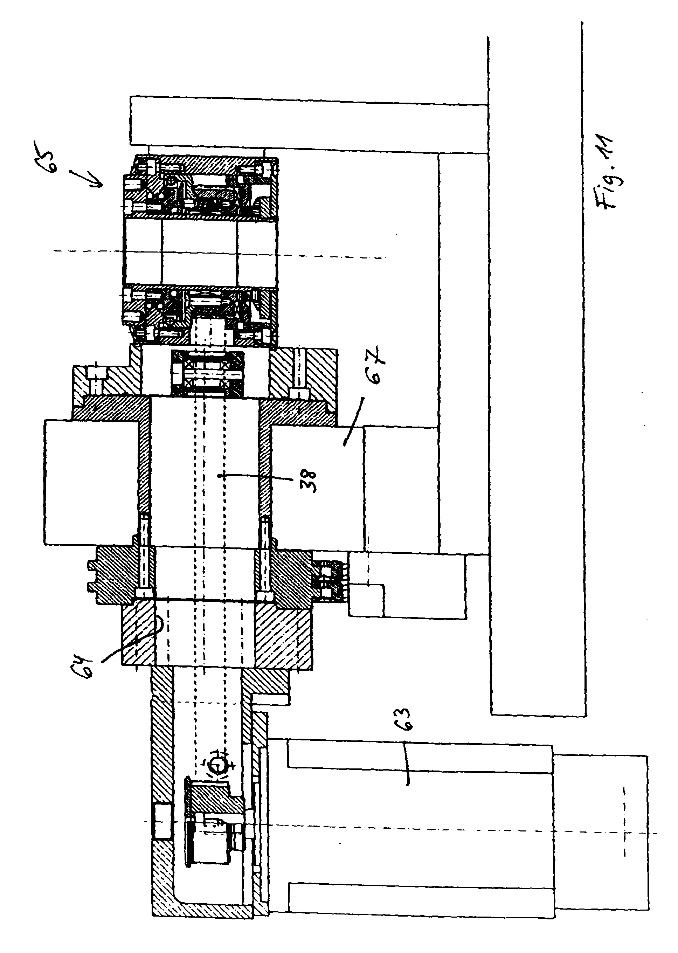

Fig. 11 zeigt das Koppelgetriebe im Einsatz an einer kombinierten Schwenk-Drehachse. Der Antrieb 63 treibt über den Riemen 38 das Koppelgetriebe 65 in einer Hohlwelle 64 an. Über die Lagerung 67 ist die Hohlwelle gelagert, so daß der Antrieb 63 bei Rotation der Hohlwelle 64 mit rotiert. Der Antriebsriemen 38, im Ausführungsbeispiel ein Zahnriemen kann auch durch andere Antriebsmittel ersetzt werden wie z.B. ein Kegelradgetriebe, das in ein Kegelrad des Koppelgetriebes eingreift.

### Liste der Bezugszeichen (kein Bestandteil der Anmeldeunterlagen)

- 10,11: Bauteil
- 14: Aussparung
- 15: Kugel
- 16: Rückhalteelement
- 16b: Flansch
- 17: Übertragungselement
- 17a: Eingriffsmöglichkeit
- 17b: Flanke
- 20: Steuerkolben
- 21: Gehäuse
- 23: Druckraum
- 24: Rückstellmittel
- 25: Zwangsführung
- 30: Betätigungseinrichtung
- 32: Treibelement
- 32a: Radialflansch
- 32b: Rollbahn
- 32c: Lagerausnehmung
- 33,57,59: elastisches Element
- 34: Abtriebsspindel
- 35: Übertragungsmittel
- 35a: Verzahnung
- 36: Steuerelement
- 37: Gehäuse
- 38: Antriebsriemen
- 39: Kugellager
- 40: stationäres Element
- 40a: Lagermöglichkeiten
- 41: Lager
- 42: Antriebselement
- 42a: Verzahnung
- 43: Bauteil
- 44: Anpreßstift
- 50: Kugelgelenk
- 51,52,53: Treibkurve
- 55: Spindel
- 56: Zahnring
- 58: Verbindungselement
- 60: Betätigungsstift
- 61: Druckleitung
- 62: Pfeil
- 63: Antrieb
- 64: Hohlwelle
- 65: Koppelgetriebe
- e: Eingriffsrichtung
- s-s: Symmetrieachse
- x: Bewegungsrichtung

## Patentansprüche

1. Einrichtung zum Anpassen eines Koppelgetriebes insbesondere zum vorzugsweise geradlinigen Bewegen oder zum Verdrehen von Bauteilen (10,11) zueinander entlang einer Bewegungsrichtung (x) mit
- mehreren, einem der beiden Bauteile (10,11) zugeordneten Lagermöglichkeiten (40a) eines ersten Zahnkranzes,
- einem dem anderen der beiden Bauteile (11,10) zugeordneten Übertragungselement (17) mit mehreren in Bewegungsrichtung (x) in Reihe angeordneten Eingriffsmöglichkeiten (17a) eines zweiten Zahnkranzes,
- mehreren zwischen den Lagermöglichkeiten (40a) des ersten Zahnkranzes und dem Übertragungselement (17) in Bewegungsrichtung (x) in Reihe angeordneten Kugeln (15),
- einem Treibelement (32), das als ein Getriebeglied mit wenigstens einer Rollbahn (32b) auf die an der Rollbahn anliegenden Kugeln (15) derart einwirkt, daß sie in einer Eingriffsrichtung (e) mehr oder weniger tief in die durch Flanken (17b) begrenzten Eingriffsmöglichkeiten (17a) des zweiten Zahnkranzes nacheinander eingeschoben werden, wodurch eine Über-, Unter- oder Umsetzung des als weiteren Getriebeglieds dienenden Bauteils bewirkt wird,
- wobei die Kugeln (15) zumindest zeitweise die Flanken (17b) der Eingriffsmöglichkeiten (17a) berühren und
- wobei das Treibelement (32) mit den Kugeln (15) mittels einer Betätigungseinrichtung in Eingriffsrichtung (e) begrenzt beweglich ist,
dadurch gekennzeichnet, daß das Treibelement (32) eine quer zur Eingriffsrichtung (e) ausgerichtete Lagerausnehmung (32c) aufweist, die die Kugeln (15) wenigstens teilweise entlang den Eingriffsmöglichkeiten (17a) zur Mitnahme bei Bewegung des Treibelements in Eingriffsrichtung (e) führt.

2. Einrichtung nach Anspruch 1, dadurch gekennzeichnet, daß das Treibelement (32) bis in eine Stellung begrenzt beweglich ist, in der die Kugeln (15) außer Eingriff zumindest mit den Eingriffsmöglichkeiten (17a) sind.

3. Einrichtung nach einem der Ansprüche 1 bis 2, dadurch gekennzeichnet, daß bei einer kreisförmigen Rollbahn (32b) die als Treibelement (32) ausgebildete Treibscheibe einen umlaufenden, sich in Eingriffsrichtung (e) erstreckenden Radialflansch (32a) aufweist, der die Lagerausnehmung (32c) für die Kugeln (15) aufweist, die in die Wandung des Radialflansches (32a) eingelassen ist.

4. Einrichtung nach einem der Ansprüche 1 bis 3, dadurch gekennzeichnet, daß der Abstand der Eingriffsmöglichkeiten (17a) zueinander zumindest in einem geringfügig anderen Teilerverhältnis steht als der Abstand der Lagermöglichkeiten (40a).

5. Einrichtung nach einem der Ansprüche 1 bis 4, dadurch gekennzeichnet, daß die Bewegung der Kugeln (15) bei Überführung außer Eingriff mit den Eingriffsmöglichkeiten (17a) in Eingriffsrichtung (e) durch ein Rückhalteelement (16) begrenzt ist.

6. Einrichtung nach einem der Ansprüche 1 bis 5, dadurch gekennzeichnet, daß bei kreisförmiger Rollbahn (32a) das innerhalb des Treibelements (32) liegende Rückhalteelement (16) mittig an einer Abtriebsspindel (34) über ein Kugellager (39) gelagert ist.

7. Einrichtung nach einem der Ansprüche 1 bis 6, dadurch gekennzeichnet, daß die Betätigungseinrichtung (30) das Treibelement (32) zunächst in eine Leerlaufstellung außer Eingriff der Kugeln (15) mit den Eingriffsmöglichkeiten (17a) überführt.

8. Einrichtung nach einem der Ansprüche 1 bis 7, dadurch gekennzeichnet, daß die Betätigungseinrichtung (30) das Treibelement (32) in eine Schaltstellung überführt, in der das Koppelgetriebe ausgekoppelt und eine Ankopplung über ein Übertragungsmittel (35) an ein Abtriebselement erfolgt, das in eingekoppelter Stellung des Koppelgetriebes mit dem Übertragungselement (17) in Wirkverbindung steht.

9. Einrichtung nach einem der Ansprüche 1 bis 8, dadurch gekennzeichnet, daß die Betätigungseinrichtung (30) ein vorzugsweise als wenigstens eine Feder ausgebildetes elastisches Element (33) aufweist, wobei dessen Kraft die Anpreßkraft in der Nullstellung der als Schalteinrichtung ausgebildeten Betätigungseinrichtung (30) bestimmt und die Betätigungseinrichtung (30) das Treibelement (32) gegen die Kraft des elastischen Elements (33) bewegt und dabei das Koppelgetriebe auskoppelt, wobei vorzugsweise die Kraft des elastischen Elements (33) von außen durch ein Steuerelement (36) beeinflußbar ist.

10. Einrichtung nach einem der Ansprüche 1 bis 10, dadurch gekennzeichnet, daß die Betätigungseinrichtung (30) wenigstens eine Treibkurve (51,52) aufweist, die mit einer Steigung vorzugsweise außerhalb der Selbsthemmung auf das Treibelement (32) zur Bewegung desselben in Eingriffsrichtung (e) einwirkt.

11. Einrichtung nach einem der Ansprüche 1 bis 8, dadurch gekennzeichnet, daß das Treibelement (32) an einer Treibkurve zwangsgeführt ist.

12. Einrichtung nach einem der Ansprüche 1 oder 11, dadurch gekennzeichnet, daß das von einem Antriebsriemen (38) umgriffene, zu einer Symmetrieachse (s-s) symmetrische Treibelement (32) beidseits in Kugeln (15) zweier Koppelgetriebe abgestützt ist und über eine Treibkurve (51) betätigbar ist

13. Einrichtung nach Anspruch 12, dadurch gekennzeichnet, daß der die Lagermöglichkeiten für die Kugeln (15) aufweisende Zahnring (56) auf der Seite der Treibkurve (51) über elastische Mittel (57) gelagert ist
